# NEUE EUROPÄISCHE PATENTSCHRIFT

(11) **EP 1 498 203 B2**
(45) Veröffentlichungstag und Bekanntmachung des Hinweises auf die Entscheidung über den Einspruch: **10.12.2014**
(45) Hinweis auf die Patenterteilung: 19.03.2008
(21) Anmeldenummer: 04015346.2
(22) Anmeldetag: 30.06.2004
(51) Int. Cl.: B23C 5/10

(54) **Stirnfräser**
End Mill
Fraise à queue

(30) Priorität: 12.07.2003 DE 20310713 U
(43) Veröffentlichungstag der Anmeldung: 19.01.2005
(73) Patentinhaber: LMT Fette Werkzeugtechnik GmbH & Co. KG, 21493 Schwarzenbek (DE)
(72) Erfinder: Kölker, Werner, 23909 Ratzeburg (DE); Rohr, Olaf, 21493 Sahms (DE); Schunk, Uwe, 23554 Lübeck (DE)
(74) Vertreter: Hauck Patent- und Rechtsanwälte

(56) Entgegenhaltungen:
- WO-A-03/103880
- WO-A-2004/069457
- DE-A1- 10 052 963
- JP-A- H06 126 521
- US-A- 4 300 862
- US-A- 5 087 159
- US-A- 5 964 555
- US-A- 6 158 927
- PATENT ABSTRACTS OF JAPAN Bd. 2003, Nr. 02, 5. Februar 2003 (2003-02-05) -& JP 2002 292515 A (HITACHI TOOL ENGINEERING LTD), 8. Oktober 2002 (2002-10-08)
- PATENT ABSTRACTS OF JAPAN Bd. 1999, Nr. 11, 30. September 1999 (1999-09-30) -& JP 11 156620 A (HITACHI TOOL ENG LTD), 15. Juni 1999 (1999-06-15)
- PATENT ABSTRACTS OF JAPAN Bd. 1999, Nr. 14, 22. Dezember 1999 (1999-12-22) -& JP 11 239911 A (HITACHI TOOL ENG LTD), 7. September 1999 (1999-09-07)

## Beschreibung

Die Erfindung bezieht sich auf einen Stirnfräser nach dem Oberbegriff von Anspruch 1. Die Erfindung bezieht sich insbesondere auf einen Stirnfräser für die Schruppbearbeitung, z.B. im Gesenk- und Formenbau.

Ein Stirnfräser der eingangs genannten Art ist aus DE 100 52 963 A1 bekannt geworden. Er weist einen Schaft auf, der in Umfangsrichtung beabstandeter Taschen im Stirnbereich Schneidplatten aufnimmt. Jede Schneidplatte hat drei Schneidkantenabschnitte, die mit dem Werkstück in Eingriff sind. Am Stirnende ist eine bogenförmige untere Schneidkante vorgesehen, die zum Umfang hin in eine Eckschneidkante übergeht. Diese geht ihrerseits in eine Umfangsschneidkante über, die in einem Winkel zurückliegt zur Schaffung einer Freifläche. Mit dem Stirnfräser soll eine hohe Vorschubgeschwindigkeit erzielt werden bei möglichst glatten Werkzeugflächen.

Der Erfindung liegt die Aufgabe zugrunde, einen Stirnfräser zu schaffen, der eine hohe Vorschubgeschwindigkeit mit hoher Abtragsrate ermöglicht bei geringer Belastung der einzelnen Schneidkanten.

Diese Aufgabe wird durch einen Stirnfräser mit den Merkmalen des Anspruchs 1 gelöst.

Der erfindungsgemäße Stirnfräser ist insbesondere für die Schruppbearbeitung im Gesenk- und Formenbau geeignet. Schaftabschnitt und Werkzeugabschnitt sind einteilig aus Hartmetall geformt. Der Werkzeugabschnitt weist mindestens eine untere Schneidkante, eine daran sich anschließende Eckschneidkante sowie eine Umfangsschneidkante auf. Vorzugsweise sind diametral gegenüberliegend entsprechende Schneidkanten vorgesehen. Bei der Erfindung weist die untere Schneidkante einen Radius von 1 bis 2 mal eines Durchmesser d1 auf, und der Abstand der unteren Schneidkante von der Achse des Schaftes ist etwa 0,1 bis 0,2 mal dem Durchmesser d1, wobei der Durchmesser d1 der Durchmesser des Flugkreises ist, den eine Tangente achsparallel an der gerundeten Eckschneidkante beschreibt.

Durch den sehr großen Radius der Stirnschneidkante kommt ein flacher Schnittbogen mit entsprechend kleinen Kappa-Werten (Einstellwinkel) mit dem Werkstück in Eingriff. Dadurch sinkt die Schnittkraft und somit die Belastung der einzelnen Schneidkantenabschnitte, was wiederum eine höhere Vorschubgeschwindigkeit und damit höhere Abtragsraten (Zerspanvolumen) ermöglicht.

Die maximale Zustelltiefe ap beträgt nach einer weiteren Ausgestaltung der Erfindung vorzugsweise 0,05 d1, d.h. des bereits erwähnten Durchmessers. Der Radius der Eckschneidkante beträgt vorzugsweise 0,05 bis 0,07 d1. Dadurch gelangt nur ein kurzer Abschnitt der Eckschneidkante mit dem Werkzeug in Eingriff, so daß die Belastung in diesem Bereich minimiert ist.

Die Umfangsschneidkante ist im Schnitt vorzugsweise eine Gerade, die um einen vorgegebenen Freiwinkel zurückspringt. Sie schneidet somit beim Nachsetzen über die Zustelltiefe nicht mit.

Wenn nach einer weiteren Ausgestaltung der Erfindung der Mittelpunkt des Kreisbogens für die Stirnschneidkante einen seitlichen Abstand von der Schaftachse von etwa 0,1 bis 0,2 d1 aufweist, dann ergibt sich in der Mitte der Stirnseite des Fräsers ein Bereich, der bei der Zerspanung nicht mitwirkt.

In der Endansicht sind die unteren oder Stimschneidkanten bogenförmig gekrümmt, und zwar in Drehrichtung gesehen nach hinten. Der sich hierbei ergebene Öffnungswinkel der Stimschneidkanten beträgt vorzugsweise 15°.

Da es bei Überlastung des Werkzeugs leicht zum Bruch kommen kann, ist nach einer Ausgestaltung der Erfindung vorgesehen, daß der Schaftabschnitt eine im Durchmesser verjüngte Sollbruchstelle aufweist.

Um auch die Möglichkeit einer Hartbearbeitung vorzusehen, schlägt eine weitere Ausgestaltung der Erfindung vor, daß untere Schneidkante und Eckschneidkante an einem Schneidenelement aus superhartem Schneidstoff ausgebildet sind, der an den Werkzeugschaft durch Hartlöten angebracht ist. Ein solcher superharter Schneidstoff ist z.B. CBN oder PKD.

Wie schon erwähnt, ermöglicht das erfindungsgemäße Werkzeug hohe Zahnvorschübe aufgrund kleiner Zustelltiefen. Die Schnittkraft wird reduziert und somit auch die Belastung der einzelnen Schneidkantenabschnitte. Andererseits wird eine hohe Vorschubgeschwindigkeit mit hohen Abtragsraten erzielt.

Ausführungsbeispiele der Erfindung werden nachfolgend anhand von Zeichnungen näher erläutert.
Fig. 1 zeigt in Seitenansicht und im Schnitt einen Stirnfräser nach der Erfindung.
Fig. 1A zeigt die Gesamtseitenansicht des Stirnfräsers nach Fig. 1.
Fig. 2 zeigt eine um 90° gegenüber Fig. 1 verdrehte Seitenansicht des Stirnfräsers nach Fig. 1.
Fig. 2A zeigt vergrößert die Verhältnisse an der unteren Schneidkante in Seitenansicht.
Fig. 3 zeigt eine Stirnansicht der Stirnfräsers nach Fig. 1 oder 2.
Fig. 4 zeigt vergrößert eine Seitenansicht des Stirnfräsers nach der Erfindung.
Fig. 5 zeigt eine Seitenansicht einer modifizierten Ausführungsform des Stirnfräsers nach der Erfindung.

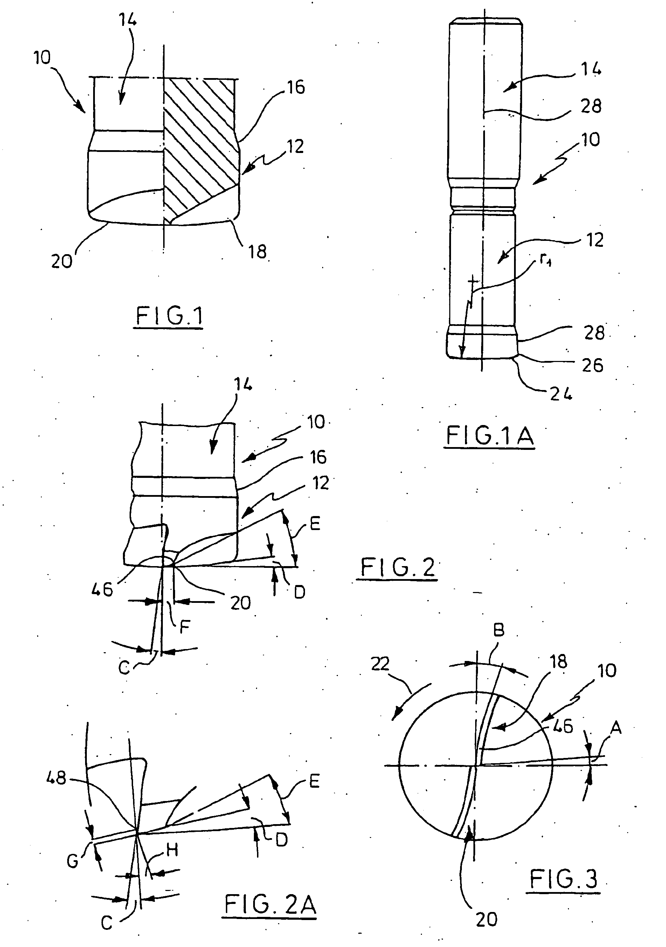

In den Fign. 1 bis 4 ist der Stirnfräser allgemein mit 10 bezeichnet. Er ist einteilig aus Hartmetall geformt und weist einen Werkstückabschnitt 12 auf sowie einen Schaftabschnitt 14, der nur teilweise dargestellt ist. Der Schaftabschnitt ist zur Einspannung in das Futter einer Werkzeugmaschine ausgebildet. Zwischen dem Werkzeugabschnitt 12 und dem Schaftabschnitt 14 ist ein im Durchmesser reduzierter Übergang 16 geformt. Im Schaftabschnitt ist eine Sollbruchstelle 17 vorgesehen, die bei Überschreiten einer bestimmten Belastung wirksam wird.

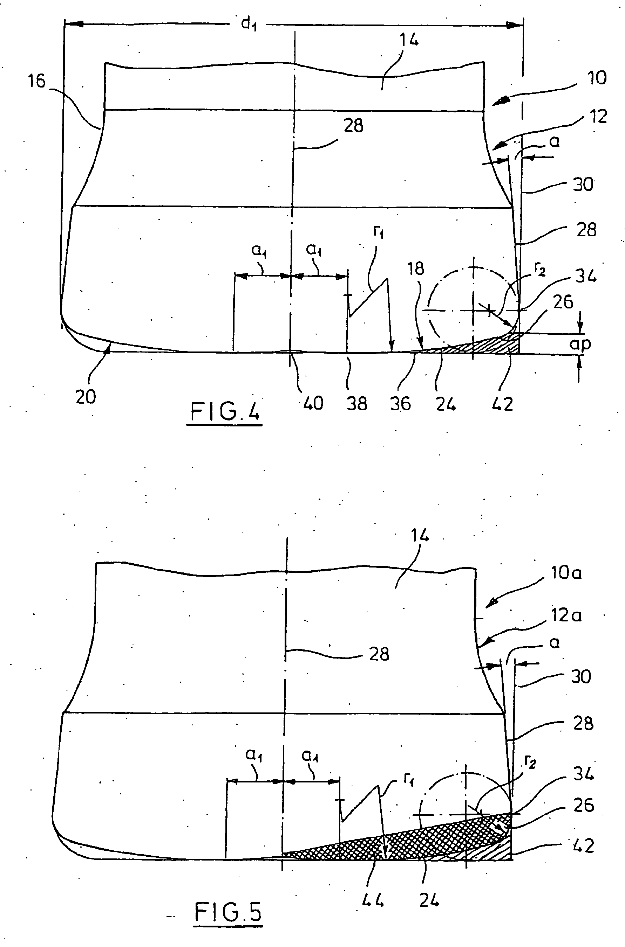

Wie insbesondere aus Fig. 3 hervorgeht, sind diametral gegenüberliegend Schneiden 18, 20 ausgebildet, die gegenüber der bei 22 angedeuteten Drehrichtung nach hinten gebogen sind mit einem Öffnungswinkel B von etwa 15°. Die Ausbildung der Schneidengeometrie soll nachfolgend anhand von Fig. 4 zunächst weiter erläutert werden. Dabei wird nur Bezug genommen auf die Schneide 18. Die Schneide 20 ist identisch ausgebildet.

Die Schneide 18 besteht aus einer unteren Schneidkante oder Stirnschneidkante 24, einer Eckschneidkante 26 und einer Umfangschneidkante 28. Letztere ist im Schnitt gerade und weicht gegenüber einer Tangente 30 an der kreisförmigen Eckschneidkante 26 um einen Freiwinkel a zurück. Die Tangente 30 beschreibt einen Flugkreis mit einem Durchmesser d1, auf den sich alle weiteren nachfolgend angegebenen Maße beziehen. Die Schneidkante 24 wird mit einem Radius von 1 bis 2 mal d1 gebildet. Im konkreten Fall ist der Radius r1 = 1,5 mal d1. Der Mittelpunkt des Kreisbogens liegt gegenüber der Werkzeugachse 28 versetzt, und zwar um einen Betrag von 0,2 bis 0,4 mal d1. Dieser Abstand a1 beträgt im konkreten Fall 0,125 mal d1. Der Radius der Eckschneidkante 26 beträgt im konkreten Fall r2 = 0,066 mal d1. Der Abstand des Tangentenpunktes 34 an der Eckschneidkante 26 zur Tangente 36 an die Stirnschneidkante 18 senkrecht zur Schaftachse 28 beträgt 0,08 bis 0,12 d1, im konkreten Fall 0,1 mal d1.

Wie erkennbar, beginnt die wirksame Stirnschneidkante 24 im Abstand a1 im Punkt 38. Zur Schaftachse 28 hin erstreckt sich die Kante 24 nach einwärts und trägt somit zum Spanabtrag nicht mehr bei. Mittig ist sogar eine geringfügige Vertiefung 40 zu erkennen.

In Fig. 4 ist der Eingriff mit einem schraffiert gezeichneten Werkstückabschnitt dargestellt, wie bei 42 zu erkennen. Es ist zu sehen, daß die Zustelltiefe ap relativ gering ist, im konkreten Fall 0,05 mal d1. Nur ein kleiner Teil der Eckschneidkante 26 trägt daher zu dem Abtrag bei. Die Stirnschneidkante 24 ist sehr flach, so daß sehr kleines Kappa (Einstellwinkel) erhalten wird mit einer entsprechend geringen Belastung der Schneidkante.

Bei der Ausführungsform nach Fig. 5 ist der Stirnfräser 10a mit annähernd den gleichen geometrischen Eigenschaften versehen wie der nach den Fign. 1 bis 4. Gleiche Teile werden daher mit gleichen Bezugszeichen versehen. Der Unterschied zu Fig. 4 besteht darin, daß in Taschen zur Ausbildung der Schneiden 18, 20 Schneidenelemente 44 eingelötet sind (In Fig. 5 ist nur ein Element 44 eingezeichnet.). Es besteht aus einem superharten Werkstoff, beispielsweise CBN oder PKD. An der Geometrie der Schneide ändert sich dabei jedoch nichts.

Aus den Fign. 1 und 3 ist zu ersehen, daß die Schneiden 18, 20 im Bereich der Stirnschneidkante 24 eine Stirnfase 46 haben, z.B. mit einer Breite von 0,8 mm. Der Stirnspanwinkel; der mit C bezeichnet, beträgt z.B. 6°. Ein erster Stirnfreiwinkel D beträgt z.B. 8° und ein zweiter Stirnfreiwinkel E beträgt z.B. 16°. Die Breite der Stirnfase ist bei F angezeigt.

Aus Fig. 2A ist zu erkennen, daß die Schneidkante 24 eine Schutzfase 48 (Kantenbruch) aufweist. Der sich ergebende Fasenwinkel H beträgt 10° bis 18°, vorzugsweise 14°. Die Fasenbreite G beträgt 0,06 bis 0,12 mm, vorzugsweise 0,08 mm. Während der Spanwinkel C positiv ist, ergibt sich durch den Kantenbruch ein negativer Spanwinkel im unteren Bereich der Hauptschneide. Fasenwinkel und -breite können für unterschiedliche Anwendungen (Werkstoffe) frei gewählt werden.

## Patentansprüche

1. Stirnfräser mit einem Schaftabschnitt und einem Werkzeugabschnitt, wobei der Werkzeugabschnitt an dem Stirnende mindestens eine flache, bogenförmige, untere Schneidkante (24), eine gerundete Eckschneidkante (26) und eine Umfangsschneidkante (28) aufweist, **dadurch gekennzeichnet, daß** Schaftabschnitt (14) und Werkzeugabschnitt (12, 12a) einteilig ausgebildet sind, und daß die untere Schneidkante (24) einen Radius r1 von 1 bis 2 mal d1 aufweist und im Abstand von 0,1 bis 0,2 d1 zur Achse (28) des Schaftabschnitts beginnt, wobei d1 der Durchmesser des Flugkreises der achsparallelen Tangente (30) an die gerundete Eckschneidkante (26) ist.

2. Stirnfräser nach Anspruch 1, **dadurch gekennzeichnet, daß** die Umfangsschneidkante (28) oberhalb des Tangentenpunkts (34) um einen vorgegebenen Freiwinkel a zurückspringt.

3. Stirnfräser nach einem der Ansprüche 1 oder 2, **dadurch gekennzeichnet, daß** der Mittelpunkt des Kreisbogens der unteren Schneidkante (24) von der Schaftachse (28) einen Abstand a¹ von 0,1 bis 0,2 d1 aufweist.

4. Stirnfräser nach einem der Ansprüche 1 bis 3, **dadurch gekennzeichnet, daß** die maximale Zustelltiefe ap etwa 0,05 d1 beträgt.

5. Stirnfräser nach einem der Ansprüche 1 bis 4, **dadurch gekennzeichnet, daß** der Radius r2 der Eckschneidkante (26) 0,05 bis 0,07 d1 beträgt.

6. Stirnfräser nach Anspruch 4 und 5, **dadurch gekennzeichnet, daß** annähernd nur ein Viertel bis zu einem Drittel der Eckschneidkante (26) zur Zustelltiefe ap beiträgt.

7. Stirnfräser nach einem der Ansprüche 1 bis 6, **dadurch gekennzeichnet, daß** die untere Schneidkante (24) in Stirnansicht gegenüber der Umlaufrichtung (22) zurückgekrümmt ist (Fig. 3).

8. Stirnfräser nach Anspruch 7, **dadurch gekennzeichnet, daß** der Öffnungswinkel B der unteren Schneidkante (24) annähernd 15° beträgt.

9. Stirnfräser nach einem der Ansprüche 1 bis 8, **dadurch gekennzeichnet, daß** der Schaftabschnitt (14) eine im Durchmesser verjüngte Sollbruchstelle (17) aufweist.

10. Stirnfräser nach einem der Ansprüche 1 bis 9, **dadurch gekennzeichnet, daß** untere Schneidkante (24) und Eckschneidkante (26) an einem Schneidenelement (44) aus superhartem Schneidstoff ausgebildet sind, der durch Hartlötung am Werkzeugabschnitt (12) befestigt ist.

11. Stirnfräser nach einem der Ansprüche 1 bis 10, **dadurch gekennzeichnet, daß** die untere Schneidkante (24) eine Fase (48) aufweist.

12. Stirnfräser nach Anspruch 11, **dadurch gekennzeichnet, daß** der Fasenwinkel H 10° bis 18° und die Fasenbreite 0,06 bis 0,12 mm beträgt.

## Claims

1. Face milling cutter with a shaft section and a tool section, whereby the front end of the tool section has at least one flat, arched, lower cutting edge (24), a rounded corner cutting edge (26), and a peripheral cutting edge (28), **characterized in that** the lower cutting edge (24) has a radius r1 from 1 to 2 times d1 and begins at a distance of 0.1 to 0.2 d1 to the axis (28) of the shaft section, whereby d1 is the diameter of the flight circle of the axially parallel tangent (30) to the rounded corner cutting edge (26).

2. Face milling cutter according to claim 1, **characterized in that** the peripheral cutting edge (28) above the tangent point (34) recoils around a predetermined clearance angle a.

3. Face milling cutter according to one of claims 1 or 2, **characterized in that** the center of the circular arc of the lower cutting edge (24) has a separation distance of a1 from 0.1 to 0.2 d1 from the shaft axis (28).

4. Face milling cutter according to one of claims 1 to 3, **characterized in that** the maximum delivery depth ap is approx. 0.05 d1.

5. Face milling cutter according to one of claims 1 to 4, **characterized in that** the radius r2 of the corner cutting edge (26) is 0.05 to 0.07 d1.

6. Face milling cutter according to claims 4 and 5, **characterized in that** only approximately one-forth to one-third of the corner cutting edge (26) contributes to the delivery depth ap.

7. Face milling cutter according to one of claims 1 to 6, **characterized in that** the lower cutting edge (24) is bent backwards with respect to the circumferential direction (22) as seen from the front (Figure 3).

8. Face milling cutter according to claim 7, **characterized in that** the aperture angle B of the lower cutting edge (24) is approximately 15°.

9. Face milling cutter according to one of claims 1 to 8, **characterized in that** the shaft section (14) has a predetermined breaking point (17) with a tapered diameter.

10. Face milling cutter according to one of claims 1 to 9, **characterized in that** the lower cutting edge (24) and the corning cutting edge (26) are formed on a blade element (44) made of a super-hard cutting material, which is attached to the tool section (12) through hard soldering.

11. Face milling cutter according to one of claims 1 to 10, **characterized in that** the lower cutting edge (24) has a bevel (48).

12. Face milling cutter according to claim 11, **characterized in that** the bevel angle H is 10° to 18° and the bevel width is 0.06 to 0.12 mm.

## Revendications

1. Fraise à queue avec une section de tige et une section d'outil, dans laquelle la section d'outil présente à l'extrémité frontale au moins une arête de coupe inférieure (24) arquée plate, une arête de coupe d'angle (26) arrondie et une arête de coupe circonférentielle (28), **caractérisée en ce que** l'arête de coupe inférieure (24) présente un rayon r1 de 1 à 2 fois d1 et commence à une distance de 0,1 à 0,2 d1 de l'axe (28) de la section de tige, d1 étant le diamètre du cercle de coupe de la tangente (30) à l'arête de coupe d'angle (26) arrondie, parallèle à l'axe.

2. Fraise à queue selon la revendication 1, **caractérisée en ce que** l'arête de coupe circonférentielle (28) au-dessus du point de tangence (34) est en retrait d'une valeur d'un angle de dépouille a prédéfini.

3. Fraise à queue selon l'une des revendications 1 ou 2, **caractérisée en ce que** le point central de l'arc de cercle de l'arête de coupe inférieure (24) présente depuis l'axe de tige (28) une distance a¹ de 0,1 à 0,2 d1.

4. Fraise à queue selon l'une des revendications 1 à 3, **caractérisée en ce que** la profondeur d'approche maximale ap est d'environ 0,05 d1.

5. Fraise à queue selon l'une des revendications 1 à 4, **caractérisée en ce que** le rayon r2 de l'arête de coupe d'angle (26) est de 0,05 à 0,07 d1.

6. Fraise à queue selon les revendications 4 et 5, **caractérisée en ce qu'**environ un quart à un tiers de l'arête de coupe d'angle (26) seulement contribue à la profondeur d'approche ap.

7. Fraise à queue selon l'une des revendications 1 à 6, **caractérisée en ce que** l'arête de coupe inférieure (24), dans la vue de face, est courbée vers l'arrière par rapport au sens de rotation (22) (figure 3).

8. Fraise à queue selon la revendication 7, **caractérisée en ce que** l'angle d'ouverture B de l'arête de coupe inférieure (24) est d'environ 15°.

9. Fraise à queue selon l'une des revendications 1 à 8, **caractérisée en ce que** la section de tige (14) présente une section de rupture intentionnelle (17) de diamètre rétréci.

10. Fraise à queue selon l'une des revendications 1 à 9, **caractérisée en ce que** l'arête de coupe inférieure (24) et l'arête de coupe d'angle (26) sont constituées sur un élément de coupe (44) en matière de coupe ultradure qui est fixé sur la section d'outil (12) par brasage.

11. Fraise à queue selon l'une des revendications 1 à 10, **caractérisée en ce que** l'arête de coupe inférieure (24) présente un chanfrein (48).

12. Fraise à queue selon la revendication 11, **caractérisée en ce que** l'angle de chanfrein H est de 10° à 18° et la largeur de chanfrein est de 0,06 à 0,12 mm.
